(19) Europäisches Patentamt

European Patent Office

Office européen des brevets

(11) Veröffentlichungsnummer : **0 364 908 B1**

(12) **EUROPÄISCHE PATENTSCHRIFT**

(45) Veröffentlichungstag der Patentschrift :
**26.08.92 Patentblatt 92/35**

(51) Int. Cl.$^5$ : **F24F 5/00**, F25B 15/06

(21) Anmeldenummer : **89119116.5**

(22) Anmeldetag : **14.10.89**

(54) **Verwendung einer hygroskopischen wä rigen Salzlösung zur Adsorptionskühlung/Klimatisierung mit Niedertempe- raturwärme.**

(30) Priorität : **21.10.88 DE 3835872**

(43) Veröffentlichungstag der Anmeldung :
**25.04.90 Patentblatt 90/17**

(45) Bekanntmachung des Hinweises auf die
Patenterteilung :
**26.08.92 Patentblatt 92/35**

(84) Benannte Vertragsstaaten :
**AT BE CH DE ES FR GB GR IT LI LU NL SE**

(56) Entgegenhaltungen :
**DD-A- 256 259**
**FR-A- 2 570 807**
**PATENT ABSTRACTS OF JAPAN Band 10, Nr. 262 (C-371) (2318), 6. September 1986, & JP-A-6189283**

(73) Patentinhaber : **Kali-Chemie Aktiengesellschaft**
**Postfach 220, Hans-Böckler-Allee 20**
**W-3000 Hannover 1 (DE)**

(72) Erfinder : **Schwetje, Norbert**
**Sögeler Strasse 76**
**W-3000 Hannover 72 (DE)**
Erfinder : **Sizmann, Rudolf**
**Unnützstrasse 2b**
**W-8000 München 82 (DE)**
Erfinder : **Khelifa, Noureddine**
**Asamstrasse 9**
**W-8000 München 90 (DE)**

(74) Vertreter : **Lauer, Dieter, Dr.**
**c/o Kali-Chemie AG Postfach 220**
**Hans-Böckler-Allee 20**
**W-3000 Hannover 1 (DE)**

EP 0 364 908 B1

## Beschreibung

Die Erfindung bezieht sich auf die Adsorptionskühlung/Klimatisierung von Räumen durch Adsorption/Desorption von Wasser unter Verwendung eines Betriebsmediums auf Basis einer flüssigen hygroskopischen Salzlösung.

Adsorptionskühl-/Klimatisierungs-Systeme (AKS) sind als solche bereits bekannt. Besonders vorteilhaft sind offene thermochemische Systeme, die auf der Adsorption/Desorption von Wasser basieren. Hierbei wird als Betriebsmedium ein zur Waserbindung befähigtes Adsorbens eingesetzt. Übliche Adsorbentien für thermochemische Systeme, die bisher untersucht wurden, sind Salze wie Lithium- oder Calcium- chlorid Säuren wie Schwefelsäure oder Phophorsäure, oder Adsorbentien auf Basis von Siliciumdioxid und/oder Alluminiumoxid, insbesondere Kieselgel, oder Silikate wie synthetische oder natürliche Zeolithe.

Die bisher verwendeten Adsorbentien weisen eine Reihe von Nachteilen auf. Feste Adsorbentien, wie z.B. Zeolithe, eignen sich gewöhnlich nur als "stationäre Betriebsmedien" und erlauben daher nur eine diskontinuierliche Arbeitsweise bezüglich Adsorption und Regeneration oder müssen, sofern sie als "umlaufendes Betriebsmedium" in einem kontinuierlichen Regenerationsverfahren eingesetzt werden sollen, aufgrund des dann erforderlichen Transportes, z.B, pneumatischen Transportes des Adsorbens besondere Anforderungen hinsichtlich Form (vorzugsweise kugelförmig), Schüttdichte und Abriebfestigkeit erfüllen. Flüssige Betriebsmedien sind demgegenüber pumpfähig und somit von Vorteil. Allerdings sind für den Einsatz solcher flüssigen Betriebsmedien in der Adsorptionskühlung/Klimatisierung hohe Konzentrationen an gelöstem Salz in den Betriebsmedien erforderlich. Hohe Salzkonzentrationen erhöhen aber die Neigung zur Salzausscheidung, begrenzen die Verfahrensweise und vermindern die Einsatzsicherheit. Es besteht die Gefahr,einer Erstarrung des Betriebsmediums, insbesondere an solchen Einsatzorten, die tagsüber und am Abend der Klimatisierung bedürfen, an denen nachts aber die Temperaturen unter z.B. 20 °C fallen können. Die Klimatisierungsanlage würde durch Erstarrung des Betriebsmediums für lange Zeit unbrauchbar sein.

Es besteht daher das Problem, eine hohe Salzkonzentration mit einer tiefen Ausscheidungstemperatur von Salz aus der Lösung zu vereinen. Geeignete Betriebsmedien sollten bei Umgebungstemperatur niedrige Wasserdampfpartialdrucke (Adsorptionsprozeß), hohe Partialdrucke bei leicht erhöhten Temperaturen (60 bis 80 °C; Desorptionsprozeß, Regeneration) aufweisen und aus preisgünstigen, möglichst umweltverträglichen Komponenten aufgebaut sein.

Aufgabe der Erfindung ist es, diese Nachteile des Standes der Technik zu überwinden. Die Aufgabe wird gelöst durch die erfindungsgemäße Verwendung einer hygroskopischen wäßrigen Salzlösung für ein Verfahren zur Adsorptionskühlung/Klimatisierung von Räumen durch Adsorption/Desorption von Wasser mittels der Salzlösung, anfassend die Schritte

a) Erzeugung eines trockenen Luftstromes durch Adsorption von Wasser aus einem wasserhaltigen, ggf. vorgekühlten, Luftstrom an die Salzlösung

b) Klimatisierung über Verdunstungskühlung unter Wasseraufnahme durch den trockenen Luftstrom,

c) Regeneration der mit Wasser angereicherten Salzlösung durch Desorption von Wasser unter Verwendung von Niedrigtemperaturwärme und Umgebungsluft,

wobei die Salzlösung

40 bis 43 Gew.-% Calciumchlorid,

15 bis 25 Gew.-%, vorzugsweise 18-bis 22 Gew.-%, Calciumnitrat

0,5 bis 5 Gew.-%, vorzugsweise 2 bis 4 Gew,-%, einer organischen Polyhydroxyverbindung und

einen entsprechenden Anteil Wasser enthält, so daß die Summe aller Komponenten 100 Gew.-% beträgt.

Die erfindungsgemäße Verwendung wird in einem an sich bekannten Adsorptionskühl-/Klimatisierungs-Kreislauf durchgeführt, dessen Betriebsmedium eine hygroskopische wässrige Salzlösung ist, die im unbeladenen oder regenerierten Zustand 40 bis 43 Gew.-% Calciumchlorid, 15 bis 25 Gew.-% Calciumnitrat und 0.5 bis 5 Gew.-% einer organische Polyhydroxyverbindung enthält. Der restliche Anteil des Betriebsmediums ist Wasser, das in solche Anteilen vorlieft, daß die Summe aller Komponenten des Betriebsmediums im unbeladenen oder regenerierten Zustand 100 Gew.-% ergibt.

In einer bevorzugten Variante der erfindungsgemäßen Verwendung setzt man als Betriebsmedium eine Salzlösung aus 40 bis 43 Gew.-% Calciumchlorid, 18 bis 22 Gew.-% Calciumnitrat, 2 bis 4 Gew.-% einer organischen Polyhydroxyverbindung und Wasser ad 100 Gew.-% ein. In einem Beispiel wird eine Salzlösung aus 42 Gew.-% Calciumchlorid, 20 Gew.-% Calciumnitrat, 3 Gew.-% einer organischen Polyhydroxyverbindung und 35 Gew.-% Wasser verwendet.

Polyhydroxyverbindungen gemäß der Erfindung sind vorzugsweise $C_2$- bis $C_4$-organische Verbindungen, welche wenigstens zwei Hydroxygruppen besitzen, z.B. solche Verbindungen wie organische Zucker oder wie organische Zuckeralkohole, oder organische Verbindungen wie Glykol und seine niederen Oligomere mit bis zu 10 C-Atomen. Besonders bevorzugt sind organische Zuckerverbindungen.

Beispiele für verwendbare organische Polyhydroxyverbindungen sind Glykol, Diethylenglykol oder Triethylenglykol, Polyglykole, Polyhydroxyaldehyde, wie Glucose, Lactose, Polyhydroxyketone wie Fructose, Zuckeralkohole wie Glycerin, Sorbit, Mannit.

In einem Beispiel der Erfindung wird Glucose als organische Polyhydroxyverbindung eingesetzt.

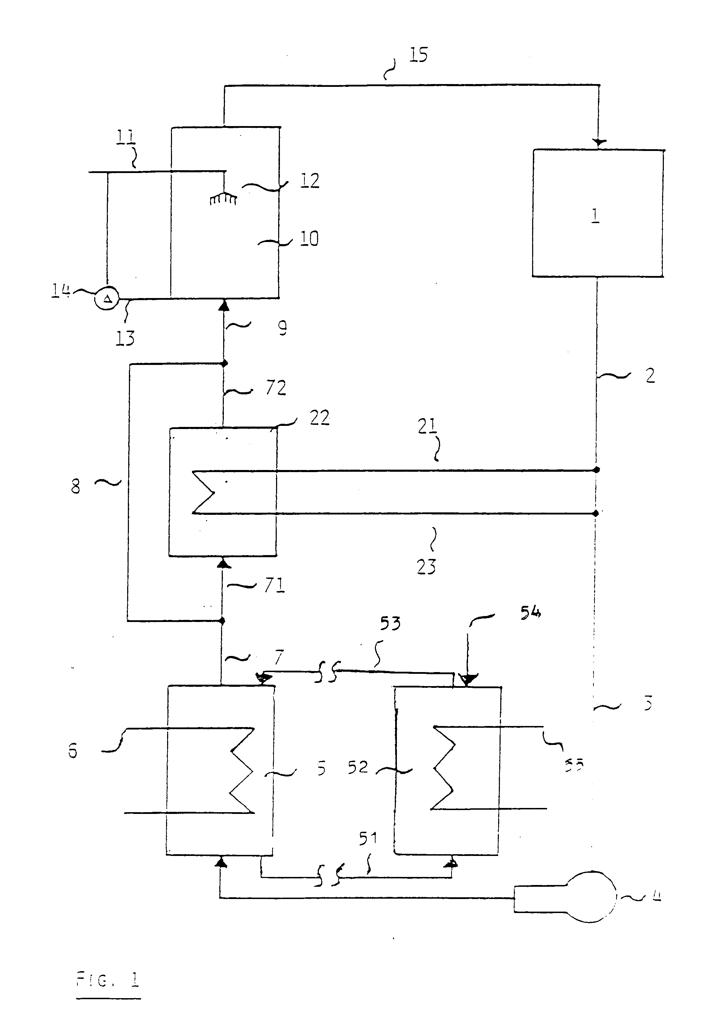

In Figur 1 ist beispielhaft das Prinzipschaltbild eines bekannten AKS angegeben, in dem ein Verfahren unter Anwendung der Erfindung durchgeführt werden kann. Aus dem zu kühlenden/ klimatisierenden Raum 1 wird ein Luftstrom über Leitung 2 und 3 und Fördermittel 4 einer mit Betriebsmedium gefüllten Säule 5 zugeführt. In dieser Säule wird dem eintretenden feuchten Luftstrom durch Kontakt mit entwässertem, also energetisch geladenem Betriebsmedium Feuchtigkeit entzogen. Dieser Adsorptionsvorgang erfolgt dabei möglichst isotherm, wozu in der Säule 5 entstehende Adsorptionswärme über ein fluides Wärmetauschmedium abgeführt wird, das über Leitung 6 der Säule zugeführt wird und in wärmeaustauschendem Kontakt mit dem Betriebsmedium steht. Der die Säule 5 über Leitung 7 verlassende trockene Luftstrom befindet sich auf gleicher oder etwas erhöhter Temperatur wie der in die Säule 5 eintretende Luftstrom. Die auftretende Temperaturdifferenz ist dabei im wesentlichen abhängig von der Strömungsgeschwindigkeit des Luftstromes und der Intensität des Wärmetausches. Der trockene Luftstrom wird über Leitungen 8 und 9 einer Befeuchtungskammer 10 zugeleitet. In diese Kammer wird über Leitung 11 und Sprühvorrichtung 12 Wasser eingeleitet. Überschüssiges Wasser kann über Leitung 13 und Beförderungsmittel 14 rückgeführt werden. Der in Kammer 10 eintretende trockene Luftstrom nimmt durch im wesentlichen adiabatisch geführte Verdampfung Wasserdampf bis zu seiner Sättigung unter gleichzeitiger Abkühlung auf, so daß ein kühler, feuchter Luftstrom aus Kammer 10 austritt, der über Leitung 15 dem Raum 1 zugeführt wird.

In einer Variation des erfindungsgemäßen Verfahrens kann die aus dem Raum 1 abzuführende Luft, die Raumfortluft, zusätzlich über einen separaten Verdunster geleitet werden. Die Raumfortluft, deren relative Feuchte im allgemeinen einen Wert von 55 % aufweisen wird (da eine solche relative Feuchte von 55 % bei angenehmer Raumtemperatur von ca. 22 °C als behaglich empfunden wird), lädt sich in diesem Verdunster zu 100 % Feuchte auf, wodurch nochmals Kühlleistung anfällt.

In einer weiteren Variation kann ein Wärmetauscher 22 zwischengeschaltet sein, in dem aus Raum 1 austretende Luft entweder vollständig oder teilweise über Leitung 21 heran und über Leitung 23 zurückgeführt wird und die im Wärmetauscher 22 mit der trockenen Luft in wärmeaustauschendem Kontakt steht. Zur Zu- und Abfuhr trockener Luft ist der Wärmetauscher 22 mit Leitungen 71 und 72 verbunden, über die der trockene Luftstrom vollständig oder teilweise geleitet werden kann.

Energetisch entladendes Betriebsmedium in Säule 5, d.h. mit Wasser beladenes Betriebsmedium, kann in an sich bekannter Weise entwässert und damit energetisch geladen werden. Diese Entwässerung kann entweder diskontinuierlich erfolgen, indem zwei oder mehrere Säulen 5 parallel geschaltet werden und mindestens je eine Säule zur Ladung und Entladung zur Verfügung stehen. Bevorzugt betreibt man aber die Be- und Entladung kontinuierlich. Eine mögliche Ausführungsform dieser Variante ist, das Betriebsmedium im Gegenstrom zum Luftstrom durch Säule 5 zu führen und im Kreislauf über eine Leitung 51 durch die Regenerationssäule 52 und danach über Leitung 53 erneut der Säule 5 zuzuführen. In der Regeneiationssäule 52 wird das Betriebsmedium durch Zufuhr von Umgebungsluft (über eine Leitung 54) im Gegenstrom unter Desorption von Wasser regeneriert. Die hierfür erforderliche Desorptionswärme wird der Regenerationssäule 52 über ein fluides Wärmetauschmedium zugeführt, das über Leitung 55 der Regenerationssäule zugeführt wird und in wärmeaustauschendem Kontakt mit dem Betriebsmedium steht.

Zur energetischen Beladung (Regenerierung) von Betriebsmedium kann thermische Energie unterschiedlicher Herkunft verwendet werden. Es kann sowohl in üblicher Art mittels Primärenergie oder Elektrizität direkt beheizt werden oder es kann Abwärme ausgenutzt werden, z.B. von konventionellen Heizsystemen oder Verbrennungsmotoren, oder es kann Energie aus der Umwelt, z.B. Solarenergie, entweder direkt oder nach Transformation mittels einer Wärmepumpe ausgenutzt werden.

Für Verfahren unter Anwendung der Erfindung eignet sich bereits Niedertemperaturwärme, z.B. mit einer Temperatur von 60 bis 80 °C. In einem Beispiel der Erfindung gelingt die Regenerierung des Betriebsmediums bereits bei Temperaturen von ca. 50 °C.

Die Verfahren unter Anwendung der Erfindung in vorteilhafter Weise mit einem offenen, überdrucklosen Luftumlauf, ohne Vakuum, ohne flüchtige Kältemittel und ohne toxische Materialien.

Das erfindungsgemäß verwendete Betriebsmedium zeichnet sich gegenüber herkömmlichen Betriebsmedium durch verschiedene Vorteile aus.

Zum einen weist es niedrige Wasserdampfpartialdrücke bei Umgebungstemperatur (Adsorptionsprozeß) auf, z.B. 400 Pa bei 20 °C, bzw. ausreichend hohe Partialdrücke bei erhöhten Temperaturen (z.B. 60 bis 80 °C Desorptionsprozeß).

Mit den erfindungsgemäß verwendeten Betriebsmedien kann bereits der Niedertemperaturwärmebereich mit Temperaturen von ca. 50 °C sehr effektiv genutzt werden. Sie erlauben damit eine hohe Leistungsfähigkeit (Coefficient of Performance, COP) der Adsorptionskühl-/Klimaanlage, d.h. das Verhältnis von Kühlleistung zu investierter thermischer Leistung aus der Niedertemperaturwärme gestaltet sich äußerst günstig. Unter normalen Betriebsbedingungen der Adsorptionskühl-/Klimaanlage lassen sich günstige COP von 1 erreichen. Die Zu- und Ableitungen der Adsorptionskühl-/Klimaanlage erfordern keinerlei thermische Isolierung, da die Kühlung/Klimatisierung erst am gewünschten Ort über Verdunstungskühlung erfolgt und durch Wässeraufnahme Kälte erzeugt wird. Dabei bildet sich ca, 13 °C kalte und wasserdampfgesättigte Luft, die-direkt in den zu kühlenden/klimatisierenden Raum einströmt. Zur Steuerung der Kühlung/Klimatisierung kann auch zusätzlich ein wärmerer trockener Luftstrom mit dem kalten wasserdampfgesättigten vermischt werden und erst dieser Luftstrom mit eingestellter Temperatur- und Feuchtigkeit dem Raum zugeführt werden. Es steht damit ein leicht regulierbares System zur Verfügung, mit dem sich angenehme Raumtemperaturen und behagliche relative Luftfeuchten einstellen lassen.

Gegenüber den bislang für adsorptive Klimatisierung benutzten festen Betriebsmedien weisen die erfindungsgemäß verwendeten, flüssigen Betriebsmedien verfahrenstechnische Vorteile auf, da sie leicht pumpfähig sind und somit eine unproblematische kontinuierliche Regeneration des Betriebsmediums während des Betriebes der Klimatisierungsanlage gestatten.

Durch die Zumischung von organischen Polyhydroxyverbindungen zur Salzlösung vermindert sich darüber hinaus unerwartet die Korrosionswirkung der Salzlösung. So wird ein Aluminiumblech in der Salzlösung bei 20 °C ohne Zusatz organischer Polyhydroxyverbindungen rasch zerfressen, während in Salzlösungen, die z.B. als organische Polyhydroxyverbindungen Glucose enthalten, auch nach Monaten nur geringfügige Korrosionsanzeichen erkennbar sind.

Der herausragendste Vorteil der erfindungsgemäß verwendeten Betriebsmedien besteht aber darin, daß sie unerwartet niedrige Ausscheidungstemperaturen unter 20 °C aufweisen. Bei Zusatz von Glucose als organische Polyhydroxyverbindung wird z.B, eine Ausscheidungstemperatur von sogar nur ca. 14 °C erreicht. Damit ist die Einsatzsicherheit als hygroskopische Flüssigkeit für den Betrieb von drucklosen Adsorptions-Kühlanlagen mit einem umweltverträglichen Medium (kein Fluorchlorkohlenwasserstoff) für viele Anwendungsfälle gegeben.

Die nachfolgenden ßeispiele sollen die Erfindung weiter erläutern, ohne sie jedoch in ihrem Umfang zu beschränken.

Beispiel 1

Das erfindungsgemäß zu verwendende Betriebsmedium wurde in einem AKS entsprechend Figure 1 eingesetzt und in und seiner Kühlungs-/Klimatisierungswirkung untersucht.

In die mit Betriebsmedium (Beispiel 4) gefüllte Adsorptionskolonne 5 wurde mittels einer Umwälzvorrichtung 4 feuchte Raumluft (aus Raum 1) eingeblasen und im Durchlauf von ihrem Wasserdampfgehalt befreit. Die anfallende Adsorptionswärme wurde Durch den internen Wärmetauscher 6 abgeführt. Der nunmehr trockene, temperaturmäßig nicht erhöhte Luftstrom wurde der Befeuchtungskammer 10 zugeführt, in der er durch im wesentlichen adiabatische Verdampfung von Wasser Wasserdampf bis zu seiner Sättigung bei gleichzeitiger Abkühlung aufnahm. Der kühle, feuchte Luftstrom wurde dem zu kühlenden/klimatisierendem Raum 1 zugeführt.

Gleichzeitig wurde das Adsorptionsmedium in einem Regenerationskreislauf über eine Desorptionskolonne geführt. In der Desorptionskolonne lief das Betriebsmedium gegen einen Strom aus Umgebungsluft an, der mit der verfügbaren Wärmequelle aufgeheizt wurde. Der warme Luftstrom trieb Wasserdampf aus dem Absorbens aus und machte es für den Adsorptionskreislauf wieder einsatzfähig. Das regenerierte Adsorptionsmedium wurde danach wieder der Adsorptionskolonne 5 zugeführt.

Während der Durchführung des Verfahren wurden als äußere Bedingungen die Außentemperatur mit 31 °C, die äußere relative Luftfeuchte mit 50 % und die Desorptionstemperatur mit ca. 50 °C vorgegeben. Unter diesen Bedingungen wurde eine Kühltemperatur der Luft mit 13 °C bei 100 % relativer Luftfeuchte erreicht. Durch Zufuhr dieses kühlen feuchten Luftstromes in den Raum 1 wurde dort die Raumtemperatur auf 22 °C und die relative Luftfeuchte im Raum auf 55 % eingestellt.

Der COP betrug unter den genannten Bedingungen 1. Das Betriebsmedium hat bei dem COP = 1 eine Energiespeicherkapazität von 750 kWh/m³

Beispiel 2 (nicht erfindungsgemäß)

Ein erfindungsgemäß geeignetes Betriebsmedium sollte einen Wasserdampfpartialdruck von ca. 400 Pa (Pa=Pascal) bei 20 °C aufweisen. Um diesen Wert einzustellen, werden 60 g Calciumchlorid in 100 g wässriger Lösung benötigt.

Eine solche gesättigte 60 Gew.-%ige wässrige Calciumchlorid-Lösung ließ sich bei 40 °C herstellen, als metastabile Lösung bis auf 20 °C abkühlen, und der Wasserdampfpartialdruck dieser übersättigten Lösung konnte dann bei 20 °C gemessen werden. Trotz des geeigneten Wasserdampfpartialdrucker ist eine solche metastabile Lösung nicht als Betriebsmedium einsetzbar, da, wenn auch oft erst nach langer Zeit, das überschüssige Salz dennoch auskristallisiert.

Beispiel 3 (nicht erfindungsgemäß)

Eine 62 Gew.-%ige wässrige Salzlösung bestehend aus einer binären Salzkombination von 42 Gew.-% Calciumchlorid und 20 Gew.-% Calciumnitrat wurde hergestellt. Der Wasserdampfpartialdruck dieser bei 20 °C wirklich stabilen (d.h. keine Auskristallisation von Salz) binären Salzkombination liegt bei 20 °C im Bereich von 400 Pa. Diese binäre Salzkombination ist damit zwar für einige Anwendungsfälle brauchbar. Tiefere Ausscheidungstemperaturen als 20 °C lassen sich mit solchen binären Salzkombinationen jedoch nicht erreichen.

Beispiel 4

Für die erfindungsgemäße Verwendung wurde eine wässrige Salzlösung aus 42 Gew.-% Calciumchlorid und 20 Gew.-% Calciumnitrat und 3 Gew.-% Glucose hergestellt. Der Wasserdampfpartialdruck dieser binären Salzkombination mit Glucosezusatz lag bei 20 °C im Bereich von 400 Pa. Diese binäre Salzkombination mit Glucosezusatz ist bis hinab zu Temperaturen von 14 °C stabil, d.h. es tritt keine Auskristallisation von Salz auf. Solche binären Salzkombionationen mit Glucosezusatz eignen sich daher hervorragend als Betriebsmedium für Adsorptions-/Klimatisierungs-Kühlanlagen.

**Patentansprüche**

**Patentansprüche für folgende Vertragsstaaten : AT, BE, CH, DE, FR, GR, GB, IT, LU, NL, SE**

1. Verwendung einer hygroskopischen wäßrigen Salzlösung für ein Verfahren zur Adsorptionskühlung/Klimatisierung von Räumen durch Adsorption/Desorption von Wasser mittels der Salzlösung, umfassend die Schritte
   a) Erzeugung eines trockenen Luftstromes durch Adsorption von Wasser aus einem wasserhaltigen, ggf. vorgekühlten, Luftstrom an die Salzlösung
   b) Klimatisierung über Verdunstungskühlung unter Wasseraufnahme durch den trockenen Luftstrom,
   c) Regeneration der mit Wasser angereicherten Salzlösung durch Desorption von Wasser unter Verwendung von Niedrigtemperaturwärme und Umgebungsluft,
   wobei die Salzlösung
   40 bis 43 Gew.-% Calciumchlorid,
   15 bis 25 Gew.-%, vorzugsweise 18 bis 22 Gew.-%, Calciumnitrat
   0,5 bis 5 Gew.-%, vorzugsweise 2 bis 4 Gew.-%, einer organischen Polyhydroxyverbindung und einen entsprechenden Anteil Wasser enthält, so daß die Summe aller Komponenten 100 Gew.-% beträgt.

2. Verwendung nach Anspruch 1, dadurch gekennzeichnet, daß die in der Salzlösung enthaltene Polyhydroxyverbindung eine $C_2$- bis $C_6$-organische Verbindung mit wenigstens zwei Hydroxygruppen, vorzugsweise eine organiche Zuckerverbindung, ist.

3. Verwendung nach Anspruch 2, dadurch gekennzeichnet, daß die organische Zuckerverbindung Glucose ist.

**Patentansprüche für folgende Vertragsstaat : ES**

1. Verfahren zur Adsorptionskühlung/Klimatisierung von Räumen durch Adsorption/Desorption von Wasser mittels einer Salzlösung, umfassend die Schritte
   a) Erzeugung eines trockenen Luftstromes durch Adsorption von Wasser aus einem wasserhaltigen, ggf. vorgekühlten, Luftstrom an die Salzlösung,
   b) Klimatisierung über Verdunstungskühlung unter Wasseraufnahme durch den trockenen Luftstrom,
   c) Regeneration der mit Wasser angereicherten Salzlösung durch Desorption von Wasser unter Verwendung von Niedrigtemperaturwärme und Umgebungsluft,

unter Verwendung einer hygroskopischen wäßrigen Salzlösung, wobei die Salzlösung

40 bis 43 Gew.-% Calciumchlorid,

15 bis 25 Gew.-%, vorzugsweise 18 bis 22 Gew.-%, Calciumnitrat

0,5 bis 5 Gew.-%, vorzugsweise 2 bis 4 Gew.-%, einer organischen Polyhydroxyverbindung und

einen entsprechenden Anteil Wasser enthält, so daß die Summe aller Komponenten 100 Gew.-% beträgt.

2. Verfahren nach Anspruch 1, dadurch gekennzeichnet, daß die in der Salzlösung enthaltene Polyhydroxy-verbindung eine $C_2$- bis $C_6$-organische Verbindung mit wenigstens zwei Hydroxygruppen, vorzugsweise eine organische Zuckerverbindung, ist.

3. Verfahren nach Anspruch 2, dadurch gekennzeichnet, daß die organische Zuckerverbindung Glucose ist.

## Claims

**Claims for the following Contracting States : AT, BE, CH, DE, FR, GR, GB, IT, LU, NL, SE**

1. The use of a hygroscopic aqueous salt solution for a process for the adsorption cooling/conditioning of rooms by adsorption/desorption of water by means of the salt solution, comprising the steps of

   a) generating a dry air stream by adsorption of water from a water-containing, optionally precooled, air stream to the salt solution,

   b) conditioning via evaporative cooling with water absorption by the dry air stream,

   c) regeneration of the water-enriched salt solution by desorption of water, using low-temperature heat and ambient air,

   the salt solution containing

   40 to 43% by weight calcium chloride,

   15 to 25% by weight, preferably 18 to 22% by weight, calcium nitrate,

   0.5 to 5% by weight, preferably 2 to 4% by weight, of an organic polyhydroxy compound and

   a corresponding portion of water so that the sum of all the constituents is 100% by weight.

2. The use according to Claim 1, characterised in that the polyhydroxy compound contained in the salt solution is a $C_2$ to $C_6$-organic compound having at least two hydroxy groups, preferably an organic sugar compound.

3. The use according to Claim 2, characterised in that the organic sugar compound is glucose.

**Claims for the Contracting States: ES**

1. A process for the adsorption cooling/conditioning of rooms by adsorption/desorption of water by means of a salt solution, comprising the steps of

   a) generating a dry air stream by adsorption of water from a water-containing, optionally precooled, air stream to the salt solution,

   b) conditioning via evaporative cooling with water absorption by the dry air stream,

   c) regeneration of the water-enriched salt solution by desorption of water, using low-temperature heat and ambient air,

   using a hygroscopic aqueous salt solution, the salt solution containing

   40 to 43% by weight calcium chloride,

   15 to 25% by weight, preferably 18 to 22% by weight, calcium nitrate,

   0.5 to 5% by weight, preferably 2 to 4% by weight, of an organic polyhydroxy compound and

   a corresponding portion of water so that the sum of all the constituents is 100% by weight.

2. A process according to Claim 1, characterised in that the polyhydroxy compound contained in the salt solution is a $C_2$ to $C_6$-organic compound having at least two hydroxy groups, preferably an organic sugar compound.

3. A process according to Claim 2, characterised in that the organic sugar compound is glucose.

**Revendications**

**Revendications pour les Etats contractants suivants : AT, BE, CH, DE, FR, GR, GB, IT, LU, NL, SE**

1. Utilisation d'une solution saline aqueuse hygroscopique pour un procédé destiné au refroidissement par adsorption/climatisation de locaux par adsorption/désorption d'eau à l'aide de la solution saline, comprenant les étapes
   a) de production d'un courant d'air sec par adsorption d'eau sur la solution saline à partir d'un courant d'air hydraté, éventuellement préréfrigéré,
   b) de climatisation par le biais d'un refroidissement par évaporation avec absorption d'eau par le courant d'air sec,
   c) de régénération de la solution salin enrichie en eau par désorption de l'eau avec emploi de chaleur à basse température et d'air ambiant, la solution saline contenant
   40 à 43% en poids de chlorure de calcium,
   15 à 25% en poids, de préférence 18 à 22% en poids de nitrate de calcium,
   0,5 à 5% en poids, de préférence 2 à 4% en poids d'un composé polyhydroxylé organique et
   une fraction d'eau correspondante, de telle sorte que la somme de tous les composants s'élève à 100% en poids.

2. Utilisation selon la revendication 1, caractérisée en ce que le composé polyhydroxylé contenu dans la solution saline est un composé organique en $C_2$ à $C_6$ avec au moins deux groupes hydroxyles, de préférence un composé de sucre organique.

3. Utilisation selon la revendication 2, caractérisée en ce que le composé de sucre organique est le glucose.

**Revendications pour l'Etat contractant suivant : ES**

1. Procédé destiné au refroidissement par adsorption/climatisation de locaux par adsorption/ désorption d'eau à l'aide d'une solution saline, comprenant les étapes
   a) de production d'un courant d'air sec par adsorption d'eau sur la solution saline à partir d'un courant d'air hydraté, éventuellement préréfrigéré,
   b) de climatisation par le biais d'un refroidissement par évaporation avec absorption d'eau par le courant d'air sec,
   c) de régénération de la solution saline enrichie en eau par désorption de l'eau avec emploi de chaleur à basse température et d'air ambiant, avec utilisation d'une solution saline aqueuse hygroscopique, la solution saline contenant
   40 à 43% en poids de chlorure de calcium,
   15 à 25% en poids, de préférence 18 à 22% en poids de nitrate de calcium,
   0,5 à 5% en poids, de préférence 2 à 4% en poids d'un composé polyhydroxylé organique,
   et une fraction d'eau correspondante, de telle sorte que la somme de tous les composants s'élève à 100% en poids.

2. Procédé selon la revendication 1, caractérisé en ce que le composé polyhydroxylé contenu dans la solution saline est un composé organique en $C_2$ à $C_6$ avec au moins deux groupes hydroxyles, de préférence un composé de sucre organique.

3. Procédé selon la revendication 2, caractérisé en ce que le composé de sucre organique est le glucose.

FIG. 1